# EUROPÄISCHE PATENTSCHRIFT

(11) **EP 1 379 902 B1**
(45) Veröffentlichungstag und Bekanntmachung des Hinweises auf die Patenterteilung: **22.03.2006**
(21) Anmeldenummer: 02740258.5
(22) Anmeldetag: 12.04.2002
(51) Int. Cl.: G02B 6/36, G02B 27/62, G02B 6/42, B23K 26/00, B25J 19/00

(54) **JUSTIERVERFAHREN, INSBESONDERE LASER-JUSTIERVERFAHREN, UND HIERFÜR GEEIGNETER AKTOR**
ADJUSTMENT METHOD, ESPECIALLY A LASER ADJUSTMENT METHOD, AND CORRESPONDING ACTUATOR
PROCEDE D'AJUSTAGE, NOTAMMENT PROCEDE D'AJUSTAGE LASER ET ACTIONNEUR CORRESPONDANT

(30) Priorität: 12.04.2001 DE 10118451
(43) Veröffentlichungstag der Anmeldung: 14.01.2004
(73) Patentinhaber: FINISAR CORPORATION, Sunnyvale, CA 94089-1133 (US)
(72) Erfinder: MÜLLER, Burkhard, 81249 München (DE)
(74) Vertreter: Meissner, Bolte & Partner
(86) Internationale Anmeldenummer: PCT/DE2002/001379
(87) Internationale Veröffentlichungsnummer: WO 2002/084357

(56) Entgegenhaltungen:
- EP-A- 0 638 895
- EP-B- 0 373 225
- WO-A-01/45094
- US-A- 5 537 276

## Beschreibung

Die Erfindung betrifft ein Justierverfahren, insbesondere für das Justieren optischer oder faseroptischer Komponenten mit den Merkmalen des Oberbegriffs des Patentanspruchs 1. Des Weiteren betrifft die Erfindung einen hierfür geeigneten Aktor.

Für das hochgenaue Justieren, beispielsweise für Komponenten der Mikromechanik, wurden in jüngerer Zeit Laser-Justierverfahren und hierfür geeignete Aktoren entwickelt.

Das Grundprinzip des Laserjustierens besteht darin, einen vorbestimmten Bereich eines Aktors mittels eines hochenergetischen, vorzugsweise gepulsten Laserstrahls in kurzer Zeit zu erhitzen, wobei die thermische Ausdehnung des betreffenden Bereichs durch entsprechende weitere Bereiche des Aktors blockiert wird. Hierdurch bauen sich in diesem erhitzten Bereich Druckspannungen auf, die bei Erreichen der Fließgrenze zu einer plastischen Verformung dieses Bereichs führen. Bei Abkühlen dieses Bereichs nach dem Abschalten der hochenergetischen Laserstrahlung wird das thermische Schrumpfen dieses Bereichs durch die weiteren Bereiche des Aktors wiederum im Wesentlichen behindert. Dies führt dazu, dass sich in dem zuvor erhitzten Bereich Zugspannungen aufbauen, die zu einer definierten Verformung des Aktors führen, wodurch das Justieren einer mit dem Aktor verbundenen Komponente ermöglicht wird.

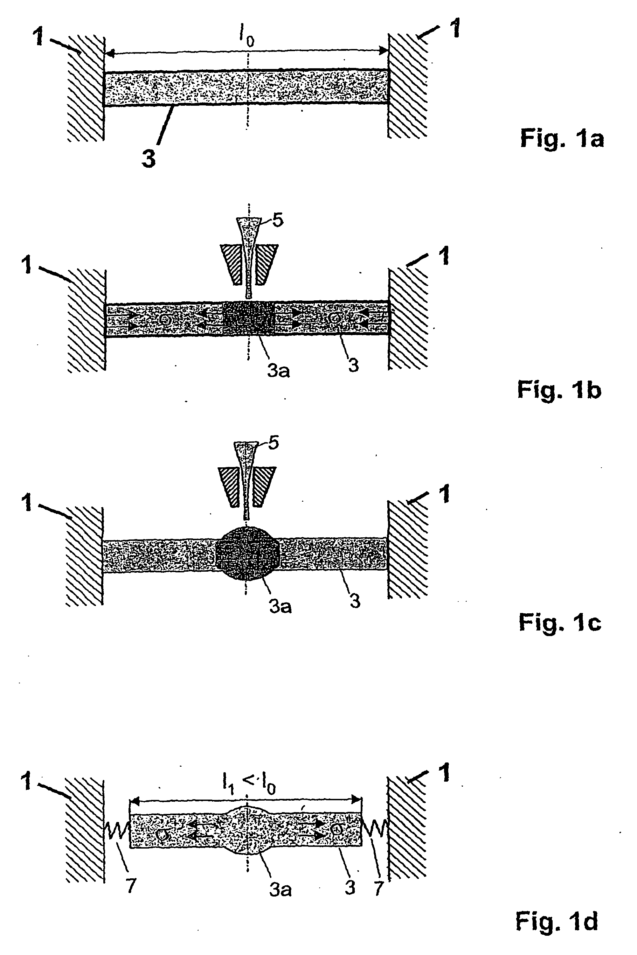

Das Prinzip eines derartigen Justierverfahrens ist in Fig. 1 dargestellt. Fig. 1a zeigt den Ausgangszustand eines zwischen zwei starren Begrenzungen 1 eingespannten Balkens 3 aus einem geeigneten Material. Der Balken 3 weist bei der Ausgangstemperatur, beispielsweise der Raumtemperatur (20° C), die Länge l₀ auf. Der mittlere Bereich 3a des Balkens 3 wird mittels eines Laserstrahls 5 in kurzer Zeit erhitzt.

Hierdurch entstehen zunächst im Balken 3 Druckspannungen σ⁽⁻⁾, da die thermische Längenausdehnung des Balkens 3 durch die starren Begrenzungen 1 blockiert ist. In dieser Phase wird üblicherweise auch eine negative Dehnung ε definiert, die den im Balken 3 ausgebildeten Druckspannungen entspricht. Diese Phase des Justierverfahrens ist in Fig. 1b dargestellt.

Überschreiten die Druckspannungen σ⁽⁻⁾ die temperaturabhängige Fließgrenze σ_{F} so kommt es zu einer plastischen Verformung des Balkens 3 im Bereich 3a. Entsprechend werden hierbei die Druckspannungen im Balken 3 reduziert. Diese Situation ist in Fig. 1c dargestellt.

Nach dem Abschalten des Laserstrahls 5 beginnt der Bereich 3a des Balkens 3 abzukühlen, wodurch ein thermisches Schrumpfen des Balkens 3 verursacht wird. Hierdurch entstehen im Balken 3 Zugspannungen σ⁽⁺⁾ , die in der Praxis häufig in der Nähe der temperaturabhängigen Fließgrenze σ_{F}(T) liegen. Diese Situation ist in Fig. 1d symbolisch dargestellt, indem in Längsrichtung des Balkens 3 gesehen, dessen Enden über federnde Elemente 7 mit den starren Begrenzungen 1 verbunden ist. Die den Zugspannungen σ⁽⁺⁾ entsprechenden Federkräfte bewirken bei einem praktisch realisierten Aktor eine definierte Verformung des Aktors. Hierzu ist in Fig. id nochmals verdeutlicht, dass die Zugspannungen σ⁽⁺⁾ durch das Verkürzen des Balkens 3 infolge der während des Erhitzens verursachten plastischen Verformung im Bereich 3a entstehen, wobei die Länge des Balkens l₁ nach dem Justiervorgang bei der Ausgangstemperatur kleiner ist als die ursprüngliche Länge l₀ bei der Ausgangstemperatur.

Ein Problem bei den bisher bekannten Justierverfahren besteht darin, dass, wie bereits vorstehend erwähnt, die im Balken 3 eingefrorenen Zugspannungen relativ nahe an der Fließgrenze σ_{F} liegen. Gleiches kann auch für die Druckspannungen gelten, die in denjenigen Bereichen auftreten, die die thermische Expansion bzw. das thermische Schrumpfen des Balkens blockieren. Da mikromechanische oder optische Komponenten bzw. Baugruppen in der Praxis immer für einen bestimmten Temperaturbereich, beispielsweise einen Bereich von -40° C bis +80° C, spezifiziert sind, und innerhalb des spezifizierten Bereichs vorbestimmte Anforderungen an die Genauigkeit und Langzeitstabilität erfüllen müssen, kommt es bei bisher bekannten Justierverfahren dann zu einer Dejustage des Aktors, wenn die justierten Komponenten bzw. die Baugruppe auf eine Temperatur in der oberen Region des spezifizierten Bereichs gebracht werden und die ursprüngliche Justage bei einer wesentlich niedrigeren Temperatur, beispielsweise Raumtemperatur durchgeführt wurde. Dieser Effekt wird durch die Temperaturabhängigkeit der Fließgrenze σ_{F} verursacht, wobei die meisten Materialien, die zur Herstellung von Aktoren für Laserjustierverfahren geeignet sind, eine mit steigender Temperatur fallende Fließgrenze aufweisen. Wird eine Temperatur erreicht, bei der die Fließgrenze σ_{F} den Wert der eingefrorenen Zugspannungen unterschreitet, so kommt es zu einem Fließen des Materials und zu einem Abbau der Zugspannungen auf den Wert der Fließgrenze σ_{F} bei der betreffenden Temperatur. Hiermit verbunden ist selbstverständlich eine entsprechende Dejustage des Aktors, die zumindest für hochgenau zu justierende Komponenten, die über einen großen Temperaturbereich spezifiziert werden müssen, nicht akzeptabel ist.

Der Erfindung liegt daher die Aufgabe zugrunde, ein Justierverfahren, insbesondere für das Justieren optischer oder faseroptischer Komponenten, zu schaffen, mit dem eine verbesserte Langzeitstabilität eines justierten Aktors bzw. einer Baugruppe mit einem derartigen Aktor innerhalb eines vorbestimmten Temperaturbereichs gewährleistet werden kann, wobei das Verfahren mit geringen zeitlichem und finanziellem Aufwand durchführbar ist. Des Weiteren liegt der Erfindung die Aufgabe zugrunde, einen speziellen Aktor zur einfachen Durchführung des Verfahrens zu schaffen.

Die Erfindung löst diese Aufgabe mit den Merkmalen des Patentanspruchs 1.

Die Erfindung geht von der Erkenntnis aus, dass das Justieren eines Aktors in vorteilhafter Weise bei einer hinsichtlich des vorbestimmten Einsatztemperaturbereichs des Aktors kritischen Temperatur Tₖ durchgeführt werden kann. Unter einer kritischen Temperatur Tₖ wird in diesem Zusammenhang eine Temperatur verstanden, bei der die Fließgrenze einen solchen Wert aufweist, dass beim Durchfahren des gesamten Einsatztemperaturbereichs nur so geringe Dejustagen des justierten Aktors auftreten können, die innerhalb vorgegebener Toleranzen liegen. Bei üblichen Aktormaterialien, welche innerhalb eines Spezifikationsbereichs eine mit steigender Temperatur fallende Fließgrenze aufweisen, wird man die kritische Temperatur im oberen Bereich des Spezifikationsbereichs oder sogar eine über dessen Obergrenze Tₒ liegende Temperatur wählen.

Nach der Erfindung wird als kritische Temperatur Tₖ im Wesentlichen diejenige Temperatur innerhalb des Einsatztemperaturbereichs gewählt, bei der innerhalb des Einsatztemperaturbereichs die minimale Fließgrenze σ_{F} des Materials gegeben ist. In diesem Fall ist gewährleistet, dass innerhalb des Einsatztemperaturbereichs kein Fließen des Materials in denjenigen Bereichen des Aktors auftritt, in denen in Folge des Justagevorgangs Eigenspannungen auftreten.

Die vorstehend erläuterte Möglichkeit der Auswahl einer noch höheren Temperatur wird in der Praxis dadurch beschränkt, dass in Baugruppen oftmals auch solche Bauelemente enthalten sind, die als maximale Temperatur der oberen Temperatur Tₒ des Einsatztemperaturbereichs ausgesetzt werden dürfen.

Nach einer Ausführungsform des Verfahrens kann eine gesamte, den Aktor umfassende Baugruppe während des Justiervorgangs auf die kritische Temperatur Tₖ gebracht werden. Werden lediglich Teilbereiche des Aktors während des Justiervorgangs auf die kritische Temperatur Tₖ gebracht, so müssen zumindest diejenigen Bereiche umfasst sein, die der thermischen Schrumpfung unterliegen, aber auch diejenigen, die diese Schrumpfung behindern.

Ein spezieller Aktor, mit dem das erfindungsgemäße Verfahren auf besonders einfache Weise realisiert werden kann, ist so ausgebildet, dass zumindest die wesentlichen Bereiche des Aktors aus einem Material bestehen, dessen Fließgrenze σ_{F} innerhalb des gesamten Einsatztemperaturbereichs im wesentlichen bei Raumtemperatur einen minimalen Wert annimmt. Mit einem derartigen Aktor kann ein Justiervorgang, wie üblich, bei Raumtemperatur durchgeführt werden.

In einem Vergleichbeispiel kann der Aktor bzw. können die wesentlichen Bereiche des Aktors aus einem Material bestehen, dessen Fließgrenze im gesamten Einsatztemperaturbereich nicht abfällt bzw. im Wesentlichen konstant bleibt. Beispielsweise kann TiV13Cr11A13 als Werkstoff für den Aktor bzw. die wesentlichen Bereiche eines Aktors eingesetzt werden. Die 0,2 % Dehngrenze, Zugfestigkeit und Fließgrenze dieses Werkstoffs fällt bis zu einer Temperatur von 100 °C nicht messbar ab.

Weitere Ausführungsformen der Erfindung ergeben sich aus den Unteransprüchen.

Die Erfindung wird im Folgenden anhand der in der Zeichnung enthaltenen Figuren näher erläutert. Im Einzelnen zeigen
- Fig. 1: schematische Darstellungen des Laserstrahl-Justierverfahrens;
- Fig. 2: eine Ausführungsform eines praktischen Aktors mit zwei Doppelbrücken und
- Fig. 3: ein Diagramm mit der temperaturabhängigen Fließgrenze σ_{F}(T) bei einem üblichen Aktormaterial innerhalb eines Einsatztemperaturbereichs [Tᵤ;Tₒ].

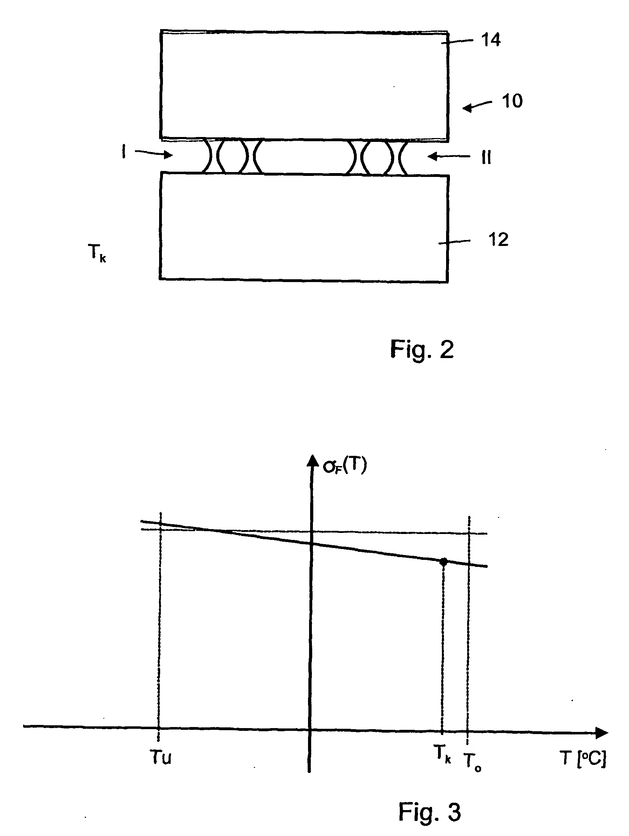

Das eingangs prinzipiell erläuterte Laserstrahl-Justierverfahren wird im Folgenden nochmals kurz anhand eines praktischen, in Fig. 2 dargestellten Aktors 10 näher veranschaulicht. Der Aktor 10 besteht aus einem Basisbereich 12, der über zwei Doppelbrücken I, II mit einem Justierbereich 14 verbunden ist. Für das Justieren wird jeweils eine der beiden Brücken der Doppelbrücken I, II, vorzugsweise mittig (bezogen auf die Längsachse einer Brücke), mit einem hochenergetischen Laserstrahl bestrahlt. Wird beispielsweise die in Fig. 2 links dargestellte Brücke der Doppelbrücke I in ihrem mittleren Bereich mittels des Laserstrahls erhitzt, so versucht sich die betreffende Brücke auszudehnen, wobei die thermische Ausdehnung durch die rechte Brücke der Doppelbrücke I im Wesentlichen blockiert wird. Hierdurch wird die linke Doppelbrücke in ihrem mittleren Bereich gestaucht. Während des Abkühlens versucht sich die linke Brücke der Doppelbrücke I zusammen zu ziehen, wodurch in ihr entsprechende Zugspannungen entstehen, da auch diese Bewegung weitgehend durch die rechte Brücke blockiert wird. Wird in einem nächsten Schritt auch der mittlere Bereich der in Fig. 2 rechts dargestellten Brücke der Doppelbrücke I mit dem Laser bestrahlt, so wird dieser Bereich infolge der in der linken Brücke vorhandenen Zugspannungen und der in der rechten Brücke vorhandenen Druckspannung (in Addition zu den Druckspannungen, die durch eine thermische Expansion der rechten Brücke verursacht werden) gestaucht. Während des Abkühlens versucht sich die rechte Brücke der Doppelbrücke I noch weiter zusammen zu ziehen, wobei diese Bewegung wiederum durch die linke Brücke blockiert wird. Demzufolge verbleiben Eigenspannungen, welche in der rechten Brücke als Zugspannungen und der linken Brücke als Druckspannungen ausgebildet sind.

Infolge dieses Justiervorgangs wird der Justierbereich 14 gegenüber der in Fig. 2 durchgezogen dargestellten Ausgangsstellung in Folge der Verkürzung der beiden Brücken der Doppelbrücke I leicht verkippt. Diese Situation ist in Fig. 2 gestrichelt dargestellt. Auf diese Weise könnte eine Justierung des Winkels einer auf dem Justierbereich 14 angeordneten Komponente (nicht dargestellt) erfolgen. Wird auch die rechte Doppelbrücke II entsprechend justiert, so kann eine hochgenaue Justierung einer auf dem Justierbereich 14 angeordneten Komponente in der Längsrichtung der Brücken erfolgen.

Werden die Justiervorgänge bei einer kritischen Temperatur Tₖ durchgeführt - wobei sich zumindest die zu justierende Doppelbrücke bzw. beide zu justierenden Dopelbrücken auf dieser Temperatur befinden müssen - so wird bei geeigneter Wahl der kritischen Temperatur Tₖ erreicht, dass nur solche Eigenspannungen in Folge des oder der Justiervorgänge eingefroren werden, die auch bei einer längerfristigen Lagerung des Aktors 10 auf einer beliebigen Temperatur innerhalb eines vorbestimmten EinsatzTemperaturbereichs [Tᵤ;Tₒ] nur zu solchen Dejustagen führen, die innerhalb akzeptabler Toleranzen liegen.

Weist beispielsweise das Aktormaterial den in Fig. 3 durchgezogen dargestellten Verlauf der temperaturabhängigen Fließgrenze σ_{F}(T) auf, so wird man, wie in Fig. 3 dargestellt, die kritische Temperatur Tₖ im oberen Bereich des Einsatztemperaturbereichs [Tᵤ;Tₒ] wählen. Die kritische Temperatur Tₖ muss bei dem in Fig. 3 dargestellten , monoton fallenden Verkauf der Fließgrenze σ_{F}(T) so hoch gewählt werden, dass auch bei einer längerfristigen Lagerung des Aktors bei der Obergrenze Tᵤ des Einsatztemperaturbereichs nur eine solche Dejustage in Folge eines Abbaus von Eigenspannungen in den wesentlichen Bereichen des Aktors erfolgt, die innerhalb vorgegebener zulässiger Toleranzen liegt.

Geht man davon aus, dass in den wesentlichen Bereichen des Aktors Eigenspannungen eingefroren werden, die extrem nahe an der Fließgrenze bei der jeweils gewählten kritischen Temperatur bzw. Justage-Temperatur liegen, so kann eine Dejustage bei einer längerfristigen Lagerung des Aktors bei der Temperatur Tₒ nur dann vollständig vermieden werden, wenn die kritische Temperatur Tₖ gleich der oberen Bereichsgrenze Tₒ gewählt wird.

Wird für den Aktor bzw. dessen wesentlichen Bereiche ein Material gewählt, dessen Fließgrenze σ_{F}(T) über den gesamten Einsatztemperaturbereich [Tᵤ;Tₒ] im wesentlichen konstant verläuft, so kann die kritische Temperatur Tₖ beliebig gewählt werden. Bevorzugt wird man hier die Temperatur Tₖ in Folge des geringsten Aufwands im Bereich der Raumtemperatur wählen.

Abschließend sei erwähnt, dass das Erwärmen der wesentlichen Bereiche des Aktors, des Aktors insgesamt bzw. einer gesamten den Aktor umfassenden Baugruppe beispielsweise durch das Bestrahlen mit einer Infrarot-Strahlungsquelle, durch das Verwenden einer üblichen, beheizten Temperaturkammer oder eines beheizten Halters oder auch mittels eines Laserstrahls erfolgen kann, der entweder, entsprechend aufgeweitet, auf die wesentlichen Bereiche gerichtet ist oder der mit entsprechender Geschwindigkeit die wesentlichen Bereiche "abtastet".

## Patentansprüche

1. Justierverfahren, insbesondere für das Justieren optischer oder faseroptischer Komponenten,
a) bei dem ein Teilbereich (I) eines Aktors (10) lokal so weit definiert erhitzt wird, dass in Folge der von wenigstens einem weiteren Teilbereich (I) des Aktors behinderten thermischen Ausdehnung des erhitzten Teilbereichs in diesem Druckspannungen entstehen, die bei Erreichen der Fließgtenze σ_{F} des Materials des Teilbereichs zu einer plastischen Stauchung des erhitzten Teilbereichsführen und
b) bei dem sich der erhitzte Teilbereich während des Abkühlens verkürzt und so nach dem Abkühlen eine definierte Geometrieanderung des Aktors eintritt, wobei in Folge einer Behinderung der Verkürzung durch den wenigstens einen weiteren Teilbereich im zuvor erhitzten Teilbereich Zugspannungen entstehen und in dem wenigstens einen weiteren Bereich Druckspannungen eingefroren werden,
**dadurch gekennzeichnet**,
c) **dass** wesentliche Bereiche (I) des Aktors (10), in denen nach dem Abkühlen die Zug- oder Druckspannungen eingefroren werden, während des Justiervorgangs zumindest so lange auf eine hinsichtlich des Einsatztemperaturbereichs des Aktors kritische Temperatur gebracht werden, bis Fließprozesse des Materials bei der kritischen Temperatur abgeschlossen sind und
d) wobei als kritische Temperatur im Wesentlichen diejenige Temperatur innerhalb des Einsatztemperaturbereichs gewählt wird, bei der innerhalb des Einsatztemperaturbereichs die minimale Fließgrenze σ_{F} des Materials gegeben ist,
e) bei dem ein Aktor verwendet wird, bei dem die wesentlichen Bereiche aus einem Material bestehen, dessen Fließgrenze σ_{F} zumindest innerhalb des Einsatzteinperaturbereichs mit steigender Temperatur monoton abfällt und dass als kritische Temperatur im Wesentlichen die der Obergrenze des Einsatztemperaturbereichs entsprechende Temperatur gewählt wird.

2. Verfahren nach einem der Ansprüche 1, **dadurch gekennzeichnet, dass** eine gesamte, den Aktor umfassende Baugruppe während des Justiervorgangs auf die kritische Temperatur gebracht wird.

3. Verfahren nach einem der Ansprüche 1 bis 2, **dadurch gekennzeichnet, dass** das Ethitzen mittels eines Lasers (5), vorzugsweise eine Nd:YAG-Lasers oder Dioden-Lasers, erfolgt.

## Claims

1. Adjusting process, in particular for adjusting optical or fibre-optic components,
a) in which a part region (I) of an actuator (10) is heated locally in a well defined manner so that as a result of the thermal expansion of the heated part region obstructed by at least one further part region (I) of the actuator, compressive stresses are produced in the heated part region and lead to plastic compression of the heated part region when reaching the flow limit σ_{F} of the material of the part region and
b) in which the heated part region is shortened during cooling and hence after cooling, a defined geometrical change in the actuator occurs, wherein as a result of an obstruction to shortening by the at least one further part region in the previously heated part region, tensile stresses are produced and compressive stresses are frozen in the at least one further region, **characterised in that**
c) important regions (I) of the actuator (10), in which tensile or compressive stresses are frozen after cooling, are brought to a temperature which is critical with respect to the use temperature range of the actuator during the adjusting process at least until flow processes of the material are completed at the critical temperature and
d) wherein essentially that temperature within the use temperature range is selected as the critical temperature, at which the minimum flow limit σ_{F} of the material is given within the use temperature range,
e) in which an actuator is used, in which the important regions consist of a material, the flow limit σ_{F} of which drops monotonously at least within the use temperature range with increasing temperature and **in that** essentially the temperature corresponding to the upper limit of the use temperature range is selected as the critical temperature.

2. Process according to one of claims 1, **characterised in that** an overall component comprising the actuator is brought to the critical temperature during the adjusting process.

3. Process according to one of claims 1 to 2, **characterised in that** heating is effected by means of a laser (5), preferably an Nd: YAG laser or diode laser.

## Revendications

1. Procédé d'ajustage, en particulier pour l'ajustage de composants optiques ou à fibres optiques;
a) dans lequel une zone partielle (I) d'un actionneur (10) est chauffée localement dans une mesure définie de telle sorte que, à la suite de la dilatation thermique de la zone partielle chauffée empêchée par au moins une autre zone partielle (I) de l'actionneur, il apparaît des tensions de pression qui entraînent une déformation plastique de la zone partielle chauffée lorsque la limite de liquidité σ_{F} du matériau de la zone partielle est atteinte; et
b) dans lequel la zone partielle chauffée se rétrécit pendant le refroidissement et une modification géométrique de l'actionneur se produit ainsi après le refroidissement, ce par quoi, à la suite d'un empêchement du rétrécissement par l'autre zone partielle, au moins au nombre d'un, il apparaît des tensions de traction dans la zone partie chauffée au préalable et des tensions de pression sont figées dans l'autre zone, au moins au nombre d'un;
**caractérisé en ce que**:
c) pendant l'opération d'ajustage, des zones (I) importantes de l'actionneur (10) dans lesquelles les tensions de traction ou de pression sont figées après le refroidissement sont amenées à une température critique par rapport à la marge de températures d'utilisation de l'actionneur pendant une durée au moins assez longue pour que des processus d'écoulement du matériau à la température critique soient amorcés; et
d) en tant que température critique, l'on choisit principalement la température à l'intérieur de la marge de températures d'utilisation à laquelle la limite de liquidité σ_{F} du matériau est atteinte à l'intérieur de la marge de températures d'utilisation;
e) on utilise un actionneur dont les zones importantes sont constituées d'un matériau dont la limite de liquidité σ_{F} diminue de façon monotone au moins à l'intérieur de la marge de températures d'utilisation à mesure que la température augmente, et en tant que température critique, l'on choisit principalement la température qui correspond à la limite supérieure de la marge de températures d'utilisation.

2. Procédé selon l'une des revendications 1, **caractérisé en ce qu'**un composant global, comprenant l'actionneur, est amené à la température critique pendant l'opération d'ajustage.

3. Procédé selon l'une quelconque des revendications 1 ou 2, **caractérisé en ce que** le chauffage est réalisé au moyen d'un laser (5), de préférence un laser Nd:YAG ou un laser à diodes.
